# EUROPÄISCHE PATENTSCHRIFT

(11) **EP 2 082 944 B1**
(45) Veröffentlichungstag und Bekanntmachung des Hinweises auf die Patenterteilung: **04.05.2011**
(21) Anmeldenummer: 08001420.2
(22) Anmeldetag: 25.01.2008
(51) Int. Cl.: B62D 5/04

(54) **Verfahren zum Erzeugen eins Rückführdrehmoment-Signals**
Method for generating a restoring moment signal
Procédé pour générer un signal de couple de retour

(43) Veröffentlichungstag der Anmeldung: 29.07.2009
(73) Patentinhaber: GM Global Technology Operations, Inc., Detroit, MI 48265-3000 (US)
(72) Erfinder: Moeller, Bertram, 55294 Bodenheim (DE)
(74) Vertreter: Manitz, Finsterwald & Partner GbR

(56) Entgegenhaltungen:
- EP-A- 1 538 065
- EP-A- 1 837 266
- DE-A1- 3 917 053
- US-A1- 2002 060 538

## Beschreibung

Die vorliegende Erfindung betrifft ein Verfahren zum Erzeugen eines Rückführdrehmoment-Signals bei einem insbesondere elektrischen Lenkhilfesystem eines Fahrzeugs.

Bei Fahrzeugen, die mit einem Lenkhilfesystem, wie z.B. einer elektrischen Servolenkung, ausgestattet sind, wird auf der Grundlage eines vom Fahrer auf das Lenkrad ausgeübten Drehmoments ein Unterstützungsdrehmoment erzeugt, welches den zum Lenken erforderlichen Kraftaufwand herabsetzt und somit den Fahrkomfort erhöht. Das Unterstützungsdrehmoment kann mit einem Rückführdrehmoment überlagert werden, welches dazu dient, die natürliche Rückstellbewegung der Räder in Richtung geradeaus weisender Neutralstellung zu unterstützen und somit das Halten der Spur während der Fahrt zu erleichtern. Der Betrag des Rückführdrehmoments wird üblicherweise durch ein Rückführdrehmoment-Signal vorgegeben, das von einem Steuergerät erzeugt wird. Bei bekannten Lenkhilfesystemen wird das Rückführdrehmoment-Signal beispielsweise in Abhängigkeit der aktuellen Lenkradstellung und der aktuellen Fahrzeuggeschwindigkeit erzeugt.

Ein auf diese Weise bestimmtes Rückführdrehmoment kann jedoch in bestimmten Fahrsituationen unvorteilhaft sein. Wird das Fahrzeug beispielsweise während eines Rückstellvorgangs beschleunigt, so nimmt die natürliche Rückstellkraft zu und die Bewegung des Lenkrads in Richtung Neutralstellung kann unerwünscht schnell ansteigen. Umgekehrt kann das Rückführdrehmoment bei geringen Geschwindigkeiten zu gering sein, um die Rückstellbewegung aufrechtzuerhalten oder in Gang zu setzen. Ferner ist bei kleinen Lenkwinkeln üblicherweise ein hohes Rückführdrehmoment nötig, da hier die Selbstrückstellkraft gering ist. Wenn der Fahrer jedoch in diesem Bereich um die Neutralstellung Lenkmanöver durchführt, so kann ein starres Lenkgefühl oder eine unerwünscht schnelle Rückstellbewegung des Lenkrads auftreten. Die EP 1 837 266 A1 offenbart ein Verfahren gemäß dem Oberbegriff des Anspruchs 1. Aufgabe der Erfindung ist es, ein besser angepasstes Rückführdrehmoment-Signal zu erzeugen, um die genannten Nachteile zu beseitigen.

Die Lösung dieser Aufgabe erfolgt durch ein Verfahren zum Erzeugen eines Rückführdrehmoment-Signals mit den Merkmalen des Anspruchs 1. Dabei eine aktuelle Richtungsbeziehung zwischen einem auf das Lenkrad ausgeübten Drehmoment und einer Lenkrad-Drehgeschwindigkeit ermittelt, ein von der Richtungsbeziehung abhängiger Skalierungsfaktor wird ermittelt und das Rückführdrehmoment-Signal wird mit dem Skalierungsfaktor multipliziert, um ein modifiziertes Rückführdrehmoment-Signal zu erhalten.

Durch die Berücksichtigung der Richtungsbeziehung zwischen dem auf das Lenkrad ausgeübten Drehmoment und der Lenkrad-Drehgeschwindigkeit beim Erzeugen des Rückführdrehmoment-Signals kann der Konflikt zwischen unzureichender Rückführung während eines Rückstellvorgangs und zu hohem Lenkwiderstand während eines Lenkmanövers aufgelöst werden. Dadurch ist es möglich, den besonderen Erfordernissen unterschiedlicher Fahrsituationen Rechnung zu tragen und somit den Fahrkomfort zu verbessern.

Mögliche Weiterbildungen der Erfindung sind in den abhängigen Ansprüchen, der Zeichnung sowie der Beschreibung angegeben.

Nicht erfindungsgemäß wird der Skalierungsfaktor auf einen ersten konstanten Wert gesetzt, wenn das Drehmoment und die Lenkrad-Drehgeschwindigkeit gleichgerichtet sind. Dieses Vorgehen trägt dem Umstand Rechnung, dass bei einem aktiven Lenkmanöver nur ein geringes Rückführdrehoment erforderlich ist.

Nicht erfindungsgemäß wird der Skalierungsfaktor auf einen zweiten, von dem ersten Wert verschiedenen konstanten Wert gesetzt, wenn das Drehmoment und die Lenkrad-Drehgeschwindigkeit einander entgegengerichtet sind. Hierdurch kann beispielsweise während des Rückstellvorgangs ein hohes Rückführdrehmoment ausgegeben werden, um ein promptes Ausrichten in die Geradeaus-Stellung zu gewährleisten. Bevorzugt werden die konstanten Werte daher derart gewählt, dass der erste Wert geringer ist als der zweite Wert.

Erfindungsgemäß wird der Skalierungsfaktor ferner auf Grundlage einer Abhängigkeit von der Fahrzeuggeschwindigkeit ermittelt. Auf diese Weise kann die geschwindigkeitsabhängige Selbstrückstellung des Fahrgestells berücksichtigt werden.

Erfindungsgemäß wird die Richtungsbeziehung anhand einer Quadrantenzuordnung des aktuellen Betriebspunktes der Lenkhilfe-Steuerung in einem Drehoment-Geschwindigkeits-Diagramm ermittelt. Die Quadrantenzuordnung kann beispielsweise ohnehin durchgeführt werden und ist somit in vorteilhafter Weise nutzbar.

Die Lösung der Aufgabe erfolgt ferner durch ein Lenkhilfesystem, das zur Durchführung eines erfindungsgemäßen Verfahrens ausgebildet ist.

Die Erfindung wird im Folgenden beispielhaft unter Bezugnahme auf die Zeichnungen beschrieben. Es zeigen:
- Fig. 1: ein schematisches Blockschaltbild einer Lenkhilfe- Steuerung, welche das erfindungsgemäße Verfahren ausführt; und
- Fig. 2: ein Diagramm, das beispielhaft ein Drehoment- Geschwindigkeitsdiagramm mit zugehöriger Quadran- teneinteilung darstellt.

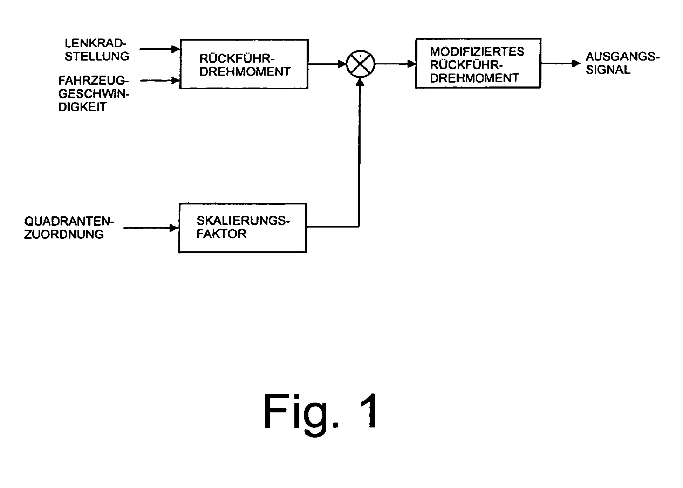

Das in Fig. 1 schematisch dargestellte Verfahren kann beispielsweise in dem Steuergerät eines elektrischen Lenkhilfesystem eines Kraftfahrzeugs ausgeführt werden, wie es aus dem Stand der Technik bekannt ist. Elektrische Lenkhilfesysteme stellen mittels eines mit dem Lenkgestänge gekoppelten Elektromotors oder eines anderen elektrischen Betätigungselements ein Lenkdrehmoment bereit. Der Betrag des Drehmoments wird anhand von Drehmomentsignalen ermittelt, die von dem Steuergerät erzeugt werden. Beispielsweise können ein Unterstützungsdrehoment-Signal, ein Dämpfungsdrehmoment-Signal und ein Rückführdrehmoment-Signal erzeugt werden, welche von dem Steuergerät überlagert werden, um ein Gesamt-Drehmomentausgangssignal zu erzeugen, das an den Elektromotor ausgegeben wird.

Das Steuergerät empfängt verschiedene Signale von Fahrzeugsensoren. Insbesondere sind an dem nicht dargestellten Fahrzeug Sensoren zur Messung der aktuellen Lenkradstellung, der aktuellen Fahrzeuggeschwindigkeit, der aktuellen Lenkrad-Drehgeschwindigkeit sowie dem auf das Lenkrad ausgeübten Fahrer-Drehoment vorgesehen. Die Lenkrad-Drehgeschwindigkeit kann beispielsweise aus der zeitlichen Änderung der Lenkradstellung oder des Lenkwinkels ermittelt werden.

Ein Rückführdrehmoment-Signal wird in Abhängigkeit von der Lenkradstellung und der Fahrzeuggeschwindigkeit erzeugt. Das erzeugte Rückführdrehmoment-Signal wird auf Grundlage eines Skalierungsfaktors oder Multiplikators gemäß Fig. 1 modifiziert. Die Steuerung ermittelt eine Richtungsbeziehung zwischen dem auf das Lenkrad ausgeübten Drehmoment und der Lenkrad-Drehgeschwindigkeit. Bei dem auf das Lenkrad ausgeübten Drehmoment kann es sich um das vom Fahrer ausgeübte Drehmoment oder um das vom Motor des Lenkhilfesystems bereitgestellte Unterstützungsdrehmoment handeln. Die Lenkrad-Drehgeschwindigkeit kann sich entweder auf das Lenkrad selbst oder auf eine mit dem Lenkrad in Verbindung stehende Komponente, wie z.B. den Motor des Lenkhilfesystems oder ein entsprechendes Übertragungselement, beziehen. Der Skalierungsfaktor wird abhängig von der Richtungsbeziehung ausgewählt. Es wird somit ein unterschiedlicher Skalierungsfaktor angewandt, je nachdem, ob das Drehmoment und die Lenkrad-Drehgeschwindigkeit gleichgerichtet oder einander entgegengerichtet sind. Das bedeutet, es wird grundsätzlich unterschieden zwischen Fahrsituationen, in denen eine Rückführung der Radstellung in geradeaus weisende Richtung stattfindet, und solchen, in denen der Fahrer ein Lenkmanöver durchführt. Wenn der Fahrer beispielsweise in eine Kurve steuert, weisen Drehmoment und Lenkrad-Drehgeschwindigkeit in die gleiche Richtung und ein geringer Skalierungsfaktor wird gewählt, um das Rückführdrehmoment-Signal zu verringern und somit einen zu hohen Widerstand gegen die Lenkbewegung zu verhindern. Wird das Fahrzeug jedoch zurück in die Geradeaus-Stellung geführt, so weisen Drehmoment und Lenkrad-Drehgeschwindigkeit jeweils in die entgegengesetzte Richtung und ein hohes Rückführdrehmoment-Signal wird ausgegeben, um eine zuverlässige Rückführung sicherzustellen.

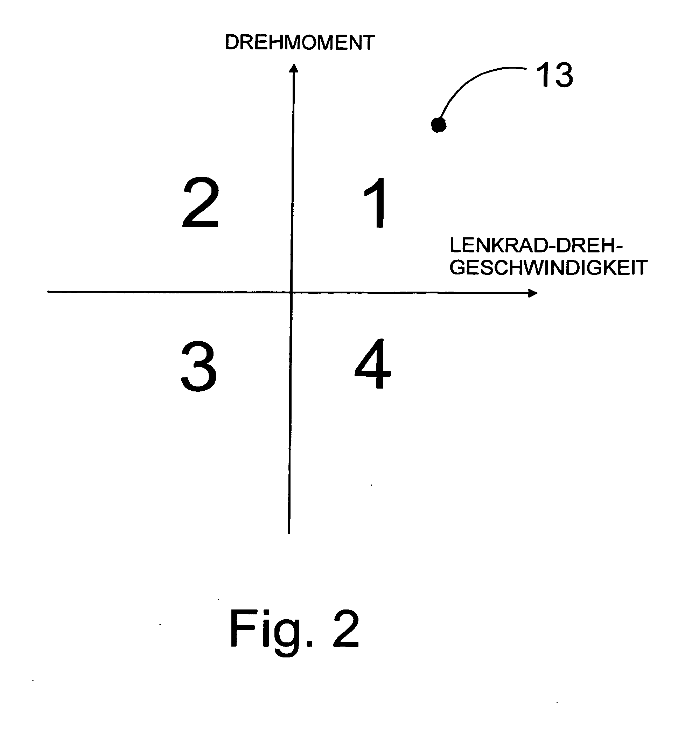

Das Ermitteln der Richtungsbeziehung zwischen Fahrerdrehmoment und Lenkrad-Drehgeschwindigkeit erfolgt in vorteilhafter Weise gemäß der in Fig. 2 dargestellten Quadrantenzuordnung der Motorsteuerung. Der aktuelle Betriebspunkt 13 der Lenkhilfe-Steuerung im Drehmoment-Geschwindigkeits-Diagramm liegt jeweils in einem der Quadranten 1, 2, 3 oder 4. Wenn sich der Betriebspunkt 13 in Quadrant 2 oder 4 befindet, wird das Vorliegen eines aktiven Lenkmanövers ermittelt. Befindet sich der Betriebspunkt hingegen in Quadrant 1 oder 3, so wird ermittelt, dass gerade eine Rückführung durchgeführt wird. Somit kann die Steuerung anhand der Quadrantenzuordnung unmittelbar zwischen den zu berücksichtigenden unterschiedlichen Fahrsituationen unterscheiden. Besonders vorteilhaft ist dabei, dass diese Quadrantenzuordnung im Allgemeinen durch den bereits vorhandenen Steuerungsalgorithmus des elektrischen Lenkhilfesystems bereitgestellt wird, so dass der Aufwand zum Ausführen des Verfahrens gering ist. Geeigneterweise wird der Skalierungsfaktor zusätzlich in Abhängigkeit der Fahrzeuggeschwindigkeit ermittelt, d.h. jeder Fahrzeuggeschwindigkeit sind zwei Skalierungsfaktor-Beträge zugeordnet: einer für die Quadranten 1 und 3 und einer für die Quadranten 2 und 4. Die Werte können aus einer Nachschlagetabelle abgefragt werden, welche bei gewünschten Änderungen in Bezug auf das Lenkverhalten leicht zu aktualisieren ist.

Insgesamt ermöglicht die Erfindung eine Verbesserung der Rückführunterstützungsfunktion von Lenkhilfesystemen, wobei einerseits ein starres Lenkgefühl sowie ein unerwünscht hoher Kraftaufwand beim Steuern und andererseits eine unzureichende Rückführkraft vermieden werden.

## Patentansprüche

1. Verfahren zum Erzeugen eines Rückführdrehmoment-Signals bei einem insbesondere elektrischen Lenkhilfesystem eines Fahrzeugs, mit den Schritten:
Ermitteln einer aktuellen Lenkradstellung;
Ermitteln einer aktuellen Fahrzeuggeschwindigkeit; und
Erzeugen eines Rückführdrehmoment-Signals in Abhängigkeit von der Lenkradstellung und der Fahrzeuggeschwindigkeit;
Ermitteln einer aktuellen Richtungsbeziehung zwischen einem auf das Lenkrad ausgeübten Drehmoment und einer Lenkrad-Drehgeschwindigkeit;
Ermitteln eines von der Richtungsbeziehung abhängigen Skalierungsfaktors; und
Multiplizieren des Rückführdrehmoment-Signals mit dem Skalierungsfaktor, um ein modifiziertes Rückführdrehmoment-Signal zu erhalten,
wobei die Richtungsbeziehung anhand einer Quadrantenzuordnung des aktuellen Betriebspunktes (13) der Lenkhilfe-Steuerung in einem Drehmoment-Lenkrad-Drehgeschwindigkeits-Diagramm ermittelt wird,
**dadurch gekennzeichnet,**
**dass** der Skalierungsfaktor auf Grundlage einer Abhängigkeit von der Fahrzeuggeschwindigkeit ermittelt wird, wobei jeder Fahrzeuggeschwindigkeit für jede Richtungsbeziehung jeweils ein Skalierungsfaktor zugeordnet ist, wobei die Skalierungsfaktoren aus einer Nachschlagetabelle abfragbar sind.

2. Lenkhilfesystem eines Kraftfahrzeugs, welches dazu ausgebildet ist, mittels eines mit einem Lenkgestänge gekoppelten Betätigungselements, insbesondere mittels eines Elektromotors, ein Lenkdrehmoment bereitzustellen, wobei das Lenkhilfesystem ein Steuergerät aufweist, welches dazu ausgebildet ist, ein Gesamt-Drehmomentausgangssignal zu erzeugen, das zur Bereitstellung des Lenkdrehmoments an das Betätigungselement ausgegeben und aus einer Überlagerung eines Unterstützungsdrehmoment-Signals, eines Dämpfungsdrehmoment-Signals und eines Rückführdrehmoment-Signals erzeugt wird, wobei das Steuergerät zur Erzeugung des Unterstützungsdrehmoment-Signals und des Dämpfungsdrehmoment-Signals ausgebildet ist und wobei das Rückführdrehmoment-Signals nach dem Verfahren gemäß Anspruch 1 erzeugt ist.

## Claims

1. A method for generating a return torque signal in a servo steering system, in particular in an electric servo steering system, of a vehicle, comprising the steps of:
determining a current steering wheel position;
determining a current vehicle speed; and
generating a return torque signal in dependence on the steering wheel position and the vehicle speed:
determining a current directional relationship between a torque exerted on the steering wheel and a speed of steering wheel rotation;
determining a scaling factor dependent on the directional relationship; and
multiplying the return torque signal by the scaling factor in order to obtain a modified return torque signal,
wherein the directional relationship is determined with the aid of quadrant allocation of the current operating point (13) of the servo steering in a torque speed/ speed of steering wheel rotation diagram, **characterized in that**
the scaling factor is determined on the basis of a dependence on the vehicle speed, with a respective scaling factor being allocated to each vehicle speed for each directional relationship, with the scaling factors being able to be polled from a look-up table.

2. A servo steering system of a motor vehicle which is configured to provide a steering torque by means of an actuation element coupled to a steering gear, in particular by means of an electric motor, wherein the servo steering system has a control device which is configured to produce a total torque output signal which is output to the actuation element for providing the steering torque and is produced from a superimposition of a supporting torque signal, of a damping torque signal and a return torque signal, wherein the control device is configured to produce the support torque signal and the damping torque signal, and wherein the return torque signal is produced in accordance with the method in accordance with claim 1.

## Revendications

1. Procédé pour engendrer un signal de couple de rappel dans un système de direction assistée, en particulier électrique, d'un véhicule, comprenant les étapes suivantes :
détermination d'une position actuelle du volant de direction ;
détermination d'une vitesse actuelle du véhicule ; et
génération d'un signal de couple de rappel en fonction de la position du volant et de la vitesse du véhicule ;
détermination d'une relation directionnelle actuelle entre un couple de rotation exercé sur le volant et une vitesse de rotation du volant ;
détermination d'un facteur d'échelle dépendant de la relation directionnelle ; et
multiplication du signal de couple de rappel avec le facteur d'échelle, afin d'obtenir un signal du couple de rotation de rappel modifié,
dans lequel la relation directionnelle est déterminée en s'aidant d'une association du point de fonctionnement actuel (13) de la commande de direction assistée avec un quadrant dans un diagramme couple de rotation/vitesse de rotation du volant,
**caractérisé en ce que** le facteur d'échelle est déterminé sur la base d'une fonction de la vitesse du véhicule, et à chaque vitesse du véhicule pour chaque relation directionnelle on associe un facteur d'échelle respectif, lesdits facteurs d'échelle pouvant être interrogés à partir d'un tableau de consultation.

2. Système de direction assistée pour un véhicule automobile, réalisé afin de préparer un couple de rotation de direction au moyen d'un élément d'actionnement, en particulier au moyen d'un moteur électrique, couplé à la tringlerie de direction, ledit système de direction assistée comprenant un appareil de commande qui est réalisé pour engendrer un signal de sortie global de couple de rotation, qui est délivré à l'élément d'actionnement pour préparer le couple de direction, et engendré par une superposition d'un signal de couple d'assistance, d'un signal de couple d'amortissement, et d'un signal de couple de rappel, dans lequel l'appareil de commande est réalisé pour engendrer le signal de couple d'assistance et le signal de couple d'amortissement, et le signal de couple de rappel est engendré d'après le procédé de la revendication 1.
